# EUROPÄISCHE PATENTSCHRIFT

(11) **EP 1 376 037 B1**
(45) Veröffentlichungstag und Bekanntmachung des Hinweises auf die Patenterteilung: **14.09.2005**
(21) Anmeldenummer: 02017002.3
(22) Anmeldetag: 26.07.2002
(51) Int. Cl.: F25J 3/04

(54) **Luftzerlegungsverfahren und -anlage mit Mischsäule und Krypton-Xenon-Gewinnung**
Air separation process and apparatus with a mixing column and krypton and xenon recovery
Procédé et dispositif de séparation d'air avec une colonne de mélange et récupération de krypton et xénon

(30) Priorität: 24.06.2002 DE 10228111
(43) Veröffentlichungstag der Anmeldung: 02.01.2004
(73) Patentinhaber: Linde Aktiengesellschaft, 65189 Wiesbaden (DE)
(72) Erfinder: Rottmann, Dietrich, 81737 München (DE); Kunz, Christian, 81479 München (DE)
(74) Vertreter: Imhof, Dietmar

(56) Entgegenhaltungen:
- DE-A- 10 015 605
- US-A- 3 222 879
- US-A- 5 067 976
- US-A- 5 122 173

## Beschreibung

Die Erfindung betrifft ein Verfahren gemäß dem Oberbegriff des Patentanspruchs 1.

Das Destilliersäulen-System zur Stickstoff-Sauerstoff-Trennung der Erfindung kann als Zweisäulensystem, beispielsweise als klassisches Doppelsäulensystem, ausgebildet sein, aber auch als Ein-, Drei- oder Mehrsäulensystem. Es kann zusätzlich zu den Kolonnen zur Stickstoff-Sauerstoff-Trennung weitere Vorrichtungen zur Gewinnung anderer Luftkomponenten, insbesondere von Edelgasen (beispielsweise Argon) aufweisen.

Die sauerstoffreiche Fraktion, die als Einsatz für die Mischsäule verwendet wird, weist eine Sauerstoffkonzentration auf, die höher als diejenige von Luft ist und beispielsweise bei 70 bis 99,5 mol%, vorzugsweise bei 90 bis 98 mol% liegt. Unter Mischsäule wird eine Gegenstromkontakt-Kolonne verstanden, in der eine leichterflüchtige gasförmige Fraktion einer schwererflüchtigen Flüssigkeit entgegengeschickt wird.

Das erfindungsgemäße Verfahren eignet sich insbesondere zur Gewinnung von gasförmigem unreinem Sauerstoff unter Druck. Als unreiner Sauerstoff wird hier ein Gemisch mit einem Sauerstoffgehalt von 99,5 mol% oder weniger, insbesondere von 70 bis 99,5 mol% bezeichnet. Die Produktdrücke liegen beispielsweise bei 2,2 bis 4,9 bar, vorzugsweise bei 2,5 bis 4,5 bar. Selbstverständlich kann das Druckprodukt bei Bedarf in gasförmigem Zustand weiter verdichtet werden. Grundsätzlich kann die Erfindung auch bei Mischsäulendrücken oberhalb des Hochdrucksäulendrucks angewendet werden, zum Beispiel bei 4,5 bis 16 bar, insbesondere bei 5 bis 12 bar.

Verfahren der eingangs genannten Art sind aus EP 531182 A1, DE 19951521 A1 und EP 1139046 A1 bekannt. Zwar wird in EP 1139046 A1 beiläufig erwähnt, dass einem derartigen Mischsäulen-System eine Krypton-Xenon-Gewinnung nachgeschaltet sein kann. In der Praxis wurde dies jedoch bisher nicht realisiert, weil bei einem derartigen System mit den bisher üblichen Methoden keine wirtschaftlich sinnvollen Krypton- und Xenon-Ausbeuten zu erreichen sind.

Der Erfindung liegt daher die Aufgabe zugrunde, ein Verfahren der eingangs genannten Art sowie eine entsprechende Vorrichtung anzugeben, die wirtschaftlich besonders günstig arbeiten und insbesondere eine relativ hohe Krypton- und/oder Xenon-Ausbeute aufweisen.

Diese Aufgabe wird dadurch gelöst, dass ein krypton- und xenonhaltiger Sauerstoffstrom aus dem Destilliersäulen-System zur Stickstoff-Sauerstoff-Trennung in eine Krypton-Xenon-Anreicherungssäule eingeleitet wird, in der Krypton-Xenon-Anreicherungssäule eine krypton- und xenonangereicherte Fraktion gewonnen wird und dass das gasförmige Kopfprodukt der Mischsäule in eine Zusatzsäule eingeleitet wird, in deren oberen Bereich eine krypton- und xenonabgereicherte Kopffraktion gewonnen wird.

Die Krypton-Xenon-Anreicherungssäule erfüllt die übliche Funktion einer Anreicherung an Krypton und Xenon bei gleichzeitiger Ausschleusung von Methan. Dies alleine genügt jedoch nicht, um bei einem Mischsäulen-Prozess eine befriedigende Krypton- und Xenon-Ausbeute zu erreichen. Mit dem Kopfprodukt der Mischsäule wird nämlich normalerweise ein bedeutender Teil der schwererflüchtigen Bestandteile der Luft aus dem Verfahren entfernt.

Bei der Erfindung ist daher zusätzlich zu der Krypton-Xenon-Anreicherungssäule eine Zusatzsäule vorgesehen, die das noch im Kopfprodukt der Mischsäule enthaltene Krypton und Xenon zurückhält. Dieses wertvolle Produkt geht damit nicht mehr mit dem Sauerstoff-Druckprodukt verloren, sondern kann beispielsweise in die Mischsäule beziehungsweise in das Destilliersäulen-System z SST zurückgeführt und von dort in die Krypton-Xenon-Anreicherungssäule eingeführt werden.

Die Begriffe "Mischsäule " und "Zusatzsäule" werden hier jeweils funktionell als entsprechende Gegenstrom-Stoffaustausch-Zonen verstanden. Sie können, müssen aber nicht in separaten Behältern angeordnet sein. Insbesondere können sich zwei oder mehrere derartiger Zonen übereinander in einem gemeinsamen Behälter befinden, wenn sie sich auf ähnlichem Druckniveau befinden. Bei der Erfindung können zum Beispiel die Mischsäule und die Zusatzsäule als eine derartige kombinierte Kolonne realisiert sein. Altemativ kann zwischen Mischsäule und Zusatzsäule eine horizontale Trennwand eingebaut sein oder Mischsäule und Zusatzsäule sind in vollständig separaten Behältern untergebracht.

Vorzugsweise wird ein Teil der krypton- und xenonabgereicherten Kopffraktion aus der Zusatzsäule als gasförmiges Sauerstoff-Druckprodukt gewonnen, ohne dass damit Krypton und Xenon in nennenswertem Umfang verloren gehen.

Es ist ferner günstig, wenn ein (anderer) Teil der krypton- und xenonabgereicherten Kopffraktion aus der Zusatzsäule in einem Kondensator-Verdampfer kondensiert wird. Das in dem Kondensator-Verdampfer erzeugte Kondensat ist im Wesentlichen Krypton- und Xenon-frei und dient als Rücklauf für die Zusatzsäule und die Krypton-Xenon-Anreicherungssäule.

Der Kondensator-Verdampfer kann gleichzeitig als Sumpfverdampfer der Krypton-Xenon-Anreicherungssäule dienen. Zusatzsäule und Krypton-Xenon-Anreicherungssäule bilden damit den Hoch- beziehungsweise Niederdruckteil einer Doppelsäule.

In einer bevorzugten Ausgestaltung des erfindungsgemäßen Verfahrens wird die sauerstoffreiche Fraktion, die auf die Mischsäule aufgegeben wird, ein bis fünf theoretische Böden, vorzugsweise zwei bis vier theoretische Böden oberhalb des Sumpfes der oder einer der Säulen des Destilliersäulen-Systems zur Stickstoff-Sauerstoff-Trennung entnommen. In der Regel stammt diese Fraktion von einer entsprechenden Zwischenstelle der Niederdrucksäule eines Zwei-Säulen-Systems. Der krypton- und xenonhaltige Sauerstoffstrom für die Krypton-Xenon-Anreicherungssäule wird dagegen vom Sumpf dieser Säule abgezogen.

Die Erfindung betrifft außerdem eine Vorrichtung zur Tieftemperaturzerlegung von Luft gemäß Patentanspruch 9.

Die Erfindung sowie weitere Einzelheiten der Erfindung werden im Folgenden anhand von in den Zeichnungen schematisch dargestellten Ausführungsbeispielen näher erläutert. Hierbei zeigen:
- Figur 1: ein erstes Ausführungsbeispiel der Erfindung mit kombinierter Säule und relativ niedrigem Sauerstoff-Produktdruck,
- Figur 2: eine Variante von Figur 1 mit separater Krypton-Xenon-Gewinnung und
- Figur 3: ein weiteres Ausführungsbeispiel mit höherem Sauerstoff-Produktdruck.

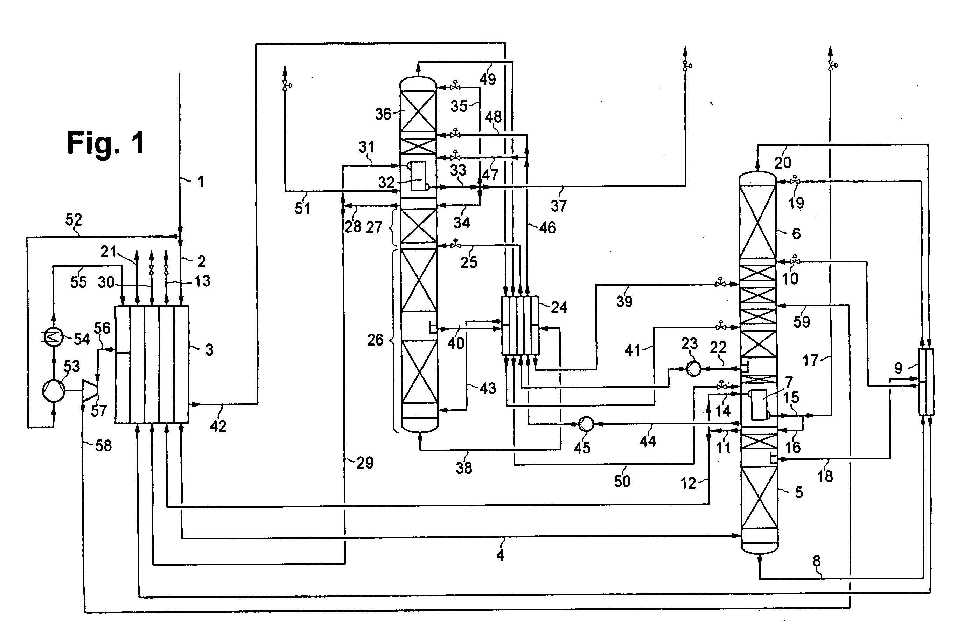

Bei dem in **Figur 1** skizzierten Ausführungsbeispiel wird gereinigte Luft 1 unter einem Druck von beispielsweise 4,5 bis 7,1 bar, vorzugsweise etwa 5,8 bar herangeführt. Ein erster Teil dieser Luft strömt über Leitung 2 zu einem Hauptwärmetauscher 3, wird dort auf etwa Taupunkt abgekühlt und fließt schließlich über Leitung 4 als "erster Einsatzluftstrom" in die Hochdrucksäule 5 eines Destilliersäulen-Systems zur Stickstoff-Sauerstoff-Trennung. Der Betriebsdruck der Hochdrucksäule 5 beträgt beispielsweise 4,3 bis 6,9 bar, vorzugsweise etwa 5,6 bar. Das Destilliersäulen-System zur Stickstoff-Sauerstoff-Trennung weist außerdem eine Niederdrucksäule 6 auf, die unter beispielsweise 1,3 bis 1,7 bar, vorzugsweise etwa 1,5 bar betrieben wird. Über einen Hauptkondensator 7 stehen diese beiden Säulen in wärmetauschender Verbindung.

Das Destilliersäulen-System zur Stickstoff-Sauerstoff-Trennung ist in den Ausführungsbeispielen als klassischer Linde-Doppelsäulen-Apparat ausgeführt. Die Erfindung kann jedoch auch bei Rektifiziersystemen mit anderer Kondensator- und/oder Säulenkonfiguration eingesetzt werden.

Sauerstoffangereicherte Flüssigkeit 8 aus dem Sumpf der Hochdrucksäule 5 wird in einem ersten Unterkühlungs-Gegenströmer 9 abgekühlt und nach Drosselung 10 der Niederdrucksäule 6 an einer Zwischenstelle zugeführt. Gasförmiger Stickstoff 11 vom Kopf der Hochdrucksäule 5 kann zu einem Teil 12 im Hauptwärmetauscher 3 angewärmt und als Druckstickstoffprodukt 13 gewonnen werden. Der Rest 14 wird im Hauptkondensator 7 im wesentlichen vollständig kondensiert. Der hierbei gewonnene flüssige Stickstoff 15 wird mindestens zum Teil 16 als Rücklauf auf die Hochdrucksäule 5 aufgegeben. Bei Bedarf kann ein anderer Teil 17 als Flüssigprodukt abgezogen werden. Eine Zwischenflüssigkeit 18 (unreiner Stickstoff) der Hochdrucksäule 5 dient nach Unterkühlung 9 und Drosselung 19 als Rücklauf für die Niederdrucksäule 6. Gasförmiger Unreinstickstoff 20 vom Kopf der Niederdrucksäule wird in den Wärmetauschern 9 und 3 angewärmt und schließlich über Leitung 21 abgezogen. Er kann wie als Regeneriergas für eine nicht dargestellte Reinigungseinrichtung für die Luft 1 eingesetzt werden.

Aus der Niederdrucksäule 6 wird flüssiger Sauerstoff 22 als "sauerstoffreiche Fraktion" abgezogen, in einer Pumpe 23 auf einen Druck von beispielsweise 5,7 bis 8,3 bar, vorzugsweise etwa 7,0 bar gebracht, in einem zweiten Unterkühlungs-Gegenströmer 24 angewärmt und schließlich auf dem Kopf der Mischsäule 26 aufgegeben (25). Die Entnahmestelle für den flüssigen Sauerstoff 22 liegt in dem Beispiel etwa vier theoretische Böden oberhalb des Sumpfs der Niederdrucksäule 6.

Der flüssigen sauerstoffreichen Fraktion 25 wird in der Mischsäule ein Wärmeträgerstrom entgegengeschickt, der in dem Ausführungsbeispiel durch einen zweiten Einsatzluftstrom 42, 43 gebildet wird, der bei einer Zwischentemperatur etwas oberhalb des kalten Endes von dem ersten Einsatzluftstrom 4 abgezweigt, aus dem Hauptwärmetauscher 3 entnommen, in dem zweiten Unterkühlungs-Gegenströmer 24 weiter abgekühlt und schließlich in den Sumpfbereich der Mischsäule 26 eingeblasen wird. Die Sumpfflüssigkeit 38 - 39 und eine Zwischenflüssigkeit 40 - 41 der Mischsäule 26 werden jeweils in dem zweiten Unterkühlungs-Gegenströmer 24 unterkühlt und an den ihrer Zusammensetzung entsprechenden Stellen in die Niederdrucksäule 6 eingedrosselt.

Das gasförmige Kopfprodukt der Mischsäule 26 strömt dem unteren Ende einer Zusatzsäule 27 zu, die in diesem Ausführungsbeispiel mit der Mischsäule 26 kombiniert ist. Die kombinierte Säule weist drei Abschnitte auf, deren oberster die Zusatzsäule 27 bildet; die beiden unteren Abschnitte stellen die Mischsäule 26 dar. Die krypton- und xenonabgereicherten Kopffraktion 28 wird zu einem ersten Teil 29 im Hauptwärmetauscher 3 angewärmt und über Leitung 30 als gasförmiges Sauerstoff-Druckprodukt gewonnen. Der Rest 31 wird in einem Kondensator-Verdampfer 32 im wesentlichen vollständig kondensiert. Das dabei gebildete Kondensat 33 enthält nur noch sehr wenig Krypton und Xenon und wird zu einem ersten Teil 34 auf die Zusatzsäule 27 und zu einem zweiten Teil 35 auf eine Krypton-Xenon-Anreicherungssäule 36 als Rücklauf aufgegeben. Ein dritter Teil 37 kann bei Bedarf als flüssiges Sauerstoffprodukt abgezogen werden.

Die Krypton-Xenon-Anreicherungssäule 36 wird unter einem Druck betrieben, der etwa 1 bar unterhalb des Kopfdrucks der Zusatzsäule 27 liegt und in dem Beispiel etwa 5,6 bar beträgt. Dadurch kann der Kondensator-Verdampfer 32 gleichzeitig als Sumpfverdampfer der Krypton-Xenon-Anreicherungssäule eingesetzt werden. Krypton-Xenon-Anreicherungssäule 36 (Niederdruckteil) und die Kombination aus Zusatzsäule 27 und Mischsäule 26 (Hochdruckteil) bilden hier eine Doppelsäule. Als Einsatzfraktion für die Krypton-Xenon-Anreicherungssäule 36 wird ein krypton- und xenonhaltiger Sauerstoffstrom 44 flüssig vom Sumpf der Niederdrucksäule 6 abgezogen, in einer Pumpe 45 auf einen erhöhten Druck gebracht und nach Anwärmung 24 über die Leitungen 46 und 47 beziehungsweise 48 an zwei verschiedenen Stelle zugespeist. Mit dem Kopfgas 49 - 50, das in die Niederdrucksäule zurückgespeist wird, verlässt teilweise Methan die Krypton-Xenon-Anreicherungssäule 36. Krypton und Xenon werden dagegen in den Sumpf gewaschen, von dem eine krypton- und xenonangereicherte Fraktion 51 flüssig abgezogen wird.

Kälte wird bei dem Verfahren durch arbeitsleistende Entspannung 57 eines dritten Einsatzluftstroms 52 - 55 - 56 auf etwa den Betriebsdruck der Niederdrucksäule gewonnen. Die Turbinenluft kann stromaufwärts ihrer Abkühlung im Hauptwärmetauscher 3 in einem von der Expansionsturbine 57 angetriebenen Nachverdichter 53 mit Nachkühler 54 weiter verdichtet werden. Der entspannte dritte Einsatzluftstrom 58 wird schließlich bei 59 in die Niederdrucksäule 6 eingeblasen.

Bei dem erfindungsgemäßen Verfahren gelangt praktisch das gesamte in der Einsatzluft 1 enthaltene Krypton und Xenon in den Sumpf der Krypton-Xenon-Anreicherungssäule 36 und damit in das von dort abgezogene Konzentrat 51. Die schwererflüchtigen Anteile aus dem ersten Einsatzluftstrom 4 werden mit der Sumpfflüssigkeit 8 der Hochdrucksäule 5 in die Niederdrucksäule transportiert. In der Mischsäulenluft (dem zweiten Einsatzluftstrom) 42 - 43 enthaltenes Krypton und Xenon wird durch die Zusatzsäule 27 am Entweichen mit dem Drucksauerstoff-Produkt 28, 29, 30 gehindert und mit den Flüssigkeiten 38 - 39 beziehungsweise 40 - 41 in die Niederdrucksäule 6 geführt. Auch die schwererflüchtigen Anteile der Turbinenluft (des dritten Einsatzluftstroms) 58 - 59 landen schließlich im Sumpf der Niederdrucksäule. Sollte der flüssige Sauerstoff 22, der in die Mischsäule 26 geführt werden, Krypton und Xenon enthalten, wird auch dieses in der Zusatzsäule 27 zurückgehalten und in die Niederdrucksäule zurückgeführt.

Durch die Abführung im Wesentlichen des gesamten Kryptons und Xenons mit der Sumpfflüssigkeit 44 der Niederdrucksäule 6 und der weiteren Aufkonzentrierung in der Krypton-Xenon-Anreicherungssäule 36 bei gleichzeitiger Ausschleusung von Methan wird bei der Erfindung eine sehr hohe Ausbeute an Krypton und Xenon erreicht.

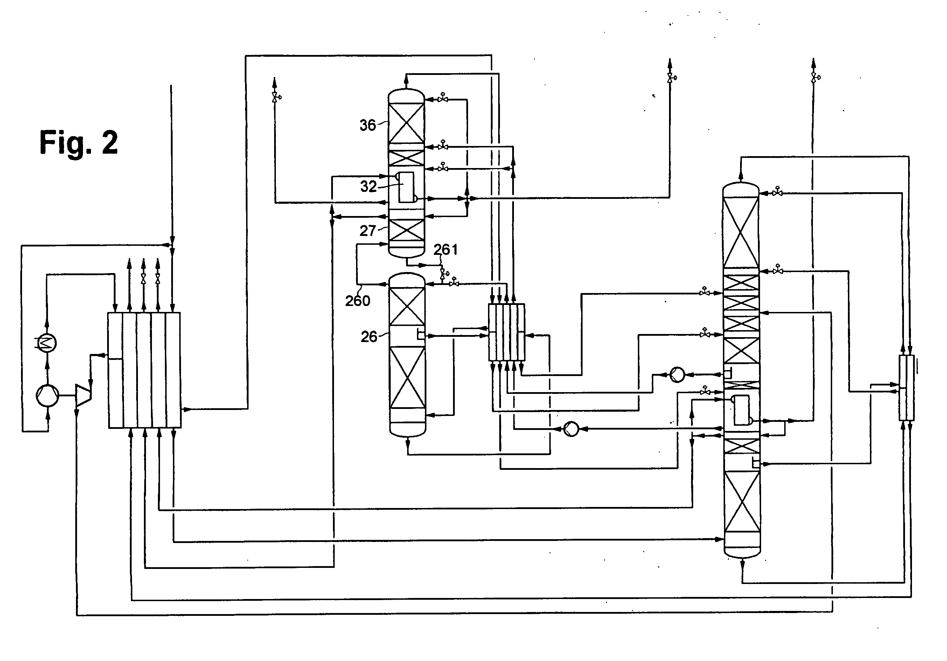

**Figur 2** unterscheidet sich ausschließlich dadurch von Figur 1, dass die Zusatzsäule 27 in einem von der Mischsäule 26 getrennten Behälter untergebracht ist. Die Krypton-Xenon-Anreicherungssäule 36 und die Zusatzsäule 27 bilden hier zusammen mit dem Kondensator-Verdampfer 32 eine Doppelsäule.

Verfahrenstechnisch ist die separate Anordnung der Säulen 26 und 27 äquivalent mit der kombinierten Säule von Figur 1, da das gesamte gasförmige Kopfprodukt 260 der Mischsäule 26 in den Sumpf der Zusatzsäule 27 geleitet wird und umgekehrt die gesamte Sumpfflüssigkeit 261 der Zusatzsäule 27 zurück zum Kopf der Mischsäule 26 strömt.

Die Variante der Figur 2 empfiehlt sich insbesondere für bereits bestehende Mischsäulen-Anlagen, die mit einer Krypton-Xenon-Gewinnung nachgerüstet werden sollen.

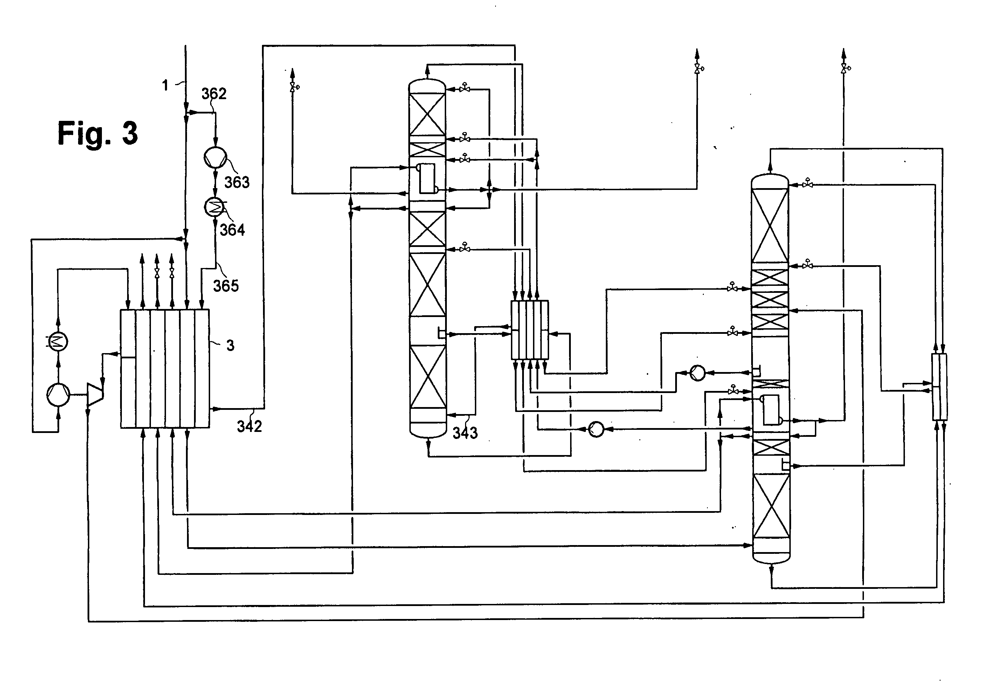

Während die in den Figuren 1 und 2 dargestellten Prozesse für Sauerstoff-Produktdrücke geeignet sind, die kleiner oder gleich dem Hochdrucksäulen-Druck sind, zeigt Figur 3 ein Verfahren, mit dem höhere Produktdrücke erreichbar sind. (Ansonsten unterscheidet sich Figur 3 nicht von Figur 1.)

Der zweite Einsatzluftstrom 342 - 343 wird hier bereits stromaufwärts des Hauptwärmetauschers 3 über Leitung 362 von der Gesamtluft 1 abgezweigt. Er wird durch einen Nachverdichter 363 mit Nachkühler 364 auf einen höheren Druck gebracht, sodass die Mischsäule 26 unter einem Druck von beispielsweise 7,0 bis 17,0 bar, vorzugsweise etwa 12,0 bar betrieben wird.

## Patentansprüche

1. Verfahren zur Tieftemperaturzerlegung von Luft in einem Destilliersäulen-System zur Stickstoff-Sauerstoff-Trennung (5, 6), bei dem
• ein erster Einsatzluftstrom (4) in das Destilliersäulen-System zur Stickstoff-Sauerstoff-Trennung eingeführt wird,
• eine sauerstoffreiche Fraktion (22) aus dem Destilliersäulen-System zur Stickstoff-Sauerstoff-Trennung flüssig auf Druck gebracht (23) und auf eine Mischsäule (26) aufgegeben (25) wird,
• ein Wärmeträgerstrom, insbesondere ein zweiter Einsatzluftstrom (43, 343), in den unteren Bereich der Mischsäule (26) eingeleitet und in Gegenstromkontakt mit der sauerstoffreichen Fraktion (22, 25) gebracht wird,
• im oberen Bereich der Mischsäule (26) ein gasförmiges Kopfprodukt (260) gewonnen wird und bei dem
• eine Flüssigkeit (38, 39, 40, 41) aus dem unteren oder mittleren Bereich der Mischsäule in das Destilliersäulen-System zur Stickstoff-Sauerstoff-Trennung eingeführt wird,
**dadurch gekennzeichnet, dass**
• ein krypton- und xenonhaltiger Sauerstoffstrom (44, 46, 47, 48) aus dem Destilliersäulen-System zur Stickstoff-Sauerstoff-Trennung in eine Krypton-Xenon-Anreicherungssäule (36) eingeleitet wird,
• in der Krypton-Xenon-Anreicherungssäule (36) eine krypton- und xenonangereicherte Fraktion (51) gewonnen wird und dass
• das gasförmige Kopfprodukt (260) der Mischsäule (26) in eine Zusatzsäule (27) eingeleitet wird, in deren oberen Bereich eine krypton- und xenonabgereicherte Kopffraktion (28) gewonnen wird.

2. Verfahren nach Anspruch 1, **dadurch gekennzeichnet, dass** ein Teil (29, 30) der krypton- und xenonabgereicherten Kopffraktion (28) aus der Zusatzsäule (27) als gasförmiges Sauerstoff-Druckprodukt gewonnen wird.

3. Verfahren nach Anspruch 1 oder 2, **dadurch gekennzeichnet, dass** ein Teil (31) der krypton- und xenonabgereicherten Kopffraktion (28) aus der Zusatzsäule (27) in einem Kondensator-Verdampfer (32) kondensiert wird.

4. Verfahren nach Anspruch 2, **dadurch gekennzeichnet, dass** ein Teil (34) des in dem Kondensator-Verdampfer (32) erzeugten Kondensats (33) als Rücklauf auf die Zusatzsäule (27) aufgegeben wird.

5. Verfahren nach Anspruch 2 oder 4, **dadurch gekennzeichnet, dass** ein Teil (35) des in dem Kondensator-Verdampfer (32) erzeugten Kondensats (33) als Rücklauf auf die Krypton-Xenon-Anreicherungssäule aufgegeben wird.

6. Verfahren nach einem der Ansprüche 2 bis 3, **dadurch gekennzeichnet, dass** in dem Kondensator-Verdampfer (32) eine Flüssigkeit aus dem unteren Bereich der Krypton-Xenon-Anreicherungssäule (36) verdampft wird.

7. Verfahren nach einem der Ansprüche 1 bis 6, **dadurch gekennzeichnet, dass** die sauerstoffreiche Fraktion (22) ein bis fünf theoretische Böden oberhalb des Sumpf der oder einer der Säulen des Destilliersäulen-Systems zur Stickstoff-Sauerstoff-Trennung entnommen wird, insbesondere der Niederdrucksäule (6) eines Zwei-Säulen-Systems, das außerdem eine Hochdrucksäule (5) aufweist.

8. Verfahren nach einem der Ansprüche 1 bis 7, **dadurch gekennzeichnet, dass** der krypton- und xenonhaltiger Sauerstoffstrom (44) vom Sumpf der oder einer der Säulen des Destilliersäulen-Systems zur Stickstoff-Sauerstoff-Trennung entnommen wird, insbesondere der Niederdrucksäule (6) eines Zwei-Säulen-Systems, das außerdem eine Hochdrucksäule (5) aufweist.

9. Vorrichtung zur Tieftemperaturzerlegung von Luft mit einem Destilliersäulen-System zur Stickstoff-Sauerstoff-Trennung (5, 6), mit einer Mischsäule (26) und
◆ mit einer ersten Einsatzluft-Leitung (4), die mit dem Destilliersäulen-System zur Stickstoff-Sauerstoff-Trennung verbunden ist,
◆ mit einer ersten Flüssigsauerstoff-Leitung (22, 25), die mit dem Destilliersäulen-System zur Stickstoff-Sauerstoff-Trennung verbunden ist und über Mittel (23) zur Druckerhöhung der Flüssigkeit in die Mischsäule (26) führt,
◆ mit einer Wärmeträger-Leitung, insbesondere einer zweiten Einsatzluft-Leitung (43, 343), die in den unteren Bereich der Mischsäule (26) führt,
◆ mit Mitteln zur Gewinnung eines gasförmigen Kopfprodukts (260) im oberen Bereich der Mischsäule (26) und
◆ mit einer Flüssigkeitsleitung (38, 39, 40, 41), die aus dem unteren oder mittleren Bereich der Mischsäule in das Destilliersäulen-System zur Stickstoff-Sauerstoff-Trennung führt,
**gekennzeichnet durch**
• eine Krypton-Xenon-Anreicherungssäule (36) zur Gewinnung einer krypton- und xenonangereicherte Fraktion (51),
• eine zweite Flüssigsauerstoff-Leitung (44, 46, 47, 48) zur Einleitung eines krypton- und xenonhaltigen Sauerstoffstroms aus dem Destilliersäulen-System zur Stickstoff-Sauerstoff-Trennung in die Krypton-Xenon-Anreicherungssäule (36),
• Mittel (260) zur Einleitung des gasförmigen Kopfprodukts der Mischsäule (26) in eine Zusatzsäule (27) und
• Mittel zur Gewinnung einer krypton- und xenonabgereicherten Kopffraktion (28) im oberen Bereich der Krypton-Xenon-Anreicherungssäule (36).

## Claims

1. Process for the low-temperature fractionation of air in a distillation column system for nitrogen-oxygen separation (5, 6), in which
• a first feed air stream (4) is introduced into the distillation column system for nitrogen-oxygen separation,
• an oxygen-rich fraction (22) from the distillation column system for nitrogen-oxygen separation is pressurized (23) in liquid form and is added (25) to a mixing column (26),
• a heat transfer medium stream, in particular a second feed air stream (43, 343), is introduced into the lower region of the mixing column (26) and is brought into countercurrent contact with the oxygen-rich fraction (22, 25),
• a gaseous top product (260) is obtained in the upper region of the mixing column (26), and in which
• a liquid (38, 39, 40, 41) from the lower or middle region of the mixing column is introduced into the distillation column system for nitrogen-oxygen separation,
**characterized in that**
• a krypton and xenon-containing oxygen stream (44, 46, 47, 48) from the distillation column system for nitrogen-oxygen separation is introduced into a krypton-xenon enriching column (36),
• a krypton- and xenon-enriched fraction (51) is obtained in the krypton-xenon enriching column (36), and **in that**
• the gaseous top product (260) of the mixing column (26) is introduced into an additional column (27), in the upper region of which a krypton- and xenon-depleted top fraction (28) is obtained.

2. Process according to Claim 1, **characterized in that** a part (29, 30) of the krypton- and xenon-depleted top fraction (28) from the additional column (27) is obtained as gaseous pressurized oxygen product.

3. Process according to Claim 1 or 2, **characterized in that** a part (31) of the krypton- and xenon-depleted top fraction (28) from the additional column (27) is condensed in a condenser-evaporator (32).

4. Process according to Claim 2, **characterized in that** a part (34) of the condensate (33) generated in the condenser-evaporator (32) is added as reflux to the additional column (27).

5. Process according to Claim 2 or 4, **characterized in that** a part (35) of the condensate (33) generated in the condenser-evaporator (32) is added as reflux to the krypton-xenon enriching column.

6. Process according to either of Claims 2 and 3, **characterized in that** in the condenser-evaporator (32) a liquid from the lower region of the krypton-xenon enriching column (36) is evaporated.

7. Process according to any of Claims 1 to 6, **characterized in that** the oxygen-rich fraction (22) is removed one to five theoretical plates above the bottom of the or one of the columns of the distillation column system for nitrogen-oxygen separation, in particular the low-pressure column (6) of a two-column system which also has a high-pressure column (5).

8. Process according to any of Claims 1 to 7, **characterized in that** the krypton- and xenon-containing oxygen stream (44) is removed from the bottom of the or one of the columns of the distillation column system for nitrogen-oxygen separation, in particular the low-pressure column (6) of a two-column system which also has a high-pressure column (5).

9. Apparatus for the low-temperature fractionation of air, having a distillation column system for nitrogen-oxygen separation (5, 6), having a mixing column (26) and
• having a first feed air line (4), which is connected to the distillation column system for nitrogen-oxygen separation,
• having a first liquid oxygen line (22, 25), which is connected to the distillation column system for nitrogen-oxygen separation and leads into the mixing column (26) via means (23) for increasing the pressure of the liquid,
• having a heat transfer medium line, in particular a second feed air line (43, 343), which leads into the lower region of the mixing column (26),
• having means for obtaining a gaseous top product (260) in the upper region of the mixing column (26), and
• having a liquid line (38, 39, 40, 41) which leads out of the lower or middle region of the mixing column into the distillation column system for nitrogen-oxygen separation,
**characterized by**
• a krypton-xenon enriching column (36) for obtaining a krypton- and xenon-enriched fraction (51),
• a second liquid oxygen line (44, 46, 47, 48) for introducing a krypton- and xenon-containing oxygen stream from the distillation column system for nitrogen-oxygen separation into the krypton-xenon enriching column (36),
• means (260) for introducing the gaseous top product of the mixing column (26) into an additional column (27), and
• means for obtaining a krypton- and xenon-depleted top fraction (28) in the upper region of the krypton-xenon enriching column (36).

## Revendications

1. Procédé de séparation cryogénique d'air dans un système à colonnes de distillation pour la séparation d'azote et d'oxygène (5, 6), dans lequel :
- un premier courant d'air de charge (4) est introduit dans le système à colonnes de distillation pour la séparation d'azote et d'oxygène,
- une fraction riche en oxygène (22) provenant du système à colonnes de distillation pour la séparation d'azote et d'oxygène est amenée sous forme fluide sous pression (23) et est alimentée (25) sur une colonne de mélange (26),
- un courant caloporteur, en particulier un deuxième courant d'air de charge (43, 343), est introduit dans la partie inférieure de la colonne de mélange (26) et est amené en contact à contre-courant avec la fraction riche en oxygène (22, 25),
- dans la partie supérieure de la colonne de mélange (26), un produit de tête gazeux (260) est obtenu et
- un liquide (38, 39, 40, 41) provenant de la partie inférieure ou centrale de la colonne de mélange est introduit dans le système à colonnes de distillation pour la séparation d'azote et d'oxygène,
**caractérisé en ce que**
- un courant d'oxygène contenant du krypton et du xénon (44, 46, 47, 48) provenant du système à colonnes de distillation pour la séparation d'azote et d'oxygène est introduit dans une colonne d'enrichissement en krypton et en xénon (36),
- dans la colonne d'enrichissement en krypton et en xénon (36) est obtenue une fraction enrichie en krypton et en xénon (51), et **en ce que**
- le produit de tête gazeux (260) de la colonne de mélange (26) est introduit dans une colonne supplémentaire (27), dans la partie supérieure de laquelle est obtenue une fraction de tête appauvrie en krypton et en xénon (28).

2. Procédé selon la revendication 1, **caractérisé en ce qu'**une partie (29, 30) de la fraction de tête appauvrie en krypton et en xénon (28) provenant de la colonne supplémentaire (27) est obtenue sous forme de produit d'oxygène gazeux sous pression.

3. Procédé selon la revendication 1 ou 2, **caractérisé en ce qu'**une partie (31) de la fraction de tête appauvrie en krypton et en xénon (28) provenant de la colonne supplémentaire (27) est condensée dans un condenseur-évaporateur (32).

4. Procédé selon la revendication 2, **caractérisé en ce qu'**une partie (34) du condensat (33) produit dans le condenseur-évaporateur (32) est alimentée sous forme de reflux dans la colonne supplémentaire (27).

5. Procédé selon la revendication 2 ou 4, **caractérisé en ce qu'**une partie (35) du condensat (33) produit dans le condenseur-évaporateur (32) est alimentée sous forme de reflux dans la colonne d'enrichissement en krypton et en xénon.

6. Procédé selon l'une quelconque des revendications 2 à 3, **caractérisé en ce qu'**un liquide provenant de la partie inférieure de la colonne d'enrichissement en krypton et en xénon (36) est évaporé dans le condenseur-évaporateur (32).

7. Procédé selon l'une quelconque des revendications 1 à 6, **caractérisé en ce que** la fraction riche en oxygène (22) est soutirée un à cinq niveaux théoriques au-dessus de la queue de la ou de l'une des colonnes du système à colonnes de distillation pour la séparation d'azote et d'oxygène, notamment de la colonne basse pression (6) d'un système à deux colonnes, qui présente en outre une colonne haute pression (5).

8. Procédé selon l'une quelconque des revendications 1 à 7, **caractérisé en ce que** le courant d'oxygène contenant du krypton et du xénon (44) est soutiré de la queue de la ou de l'une des colonnes du système à colonnes de distillation pour la séparation d'azote et d'oxygène, notamment de la colonne basse pression (6) d'un système à deux colonnes qui présente en outre une colonne haute pression (5).

9. Dispositif de séparation cryogénique d'air comprenant un système à colonnes de distillation pour la séparation d'azote et d'oxygène (5, 6), comprenant une colonne de mélange (26) et
- avec une première conduite d'air de charge (4), qui est connectée au système à colonnes de distillation pour la séparation d'azote et d'oxygène,
- avec une première conduite d'oxygène liquide (22, 25) qui est connectée au système à colonnes de distillation pour la séparation d'azote et d'oxygène et qui conduit par le biais de moyens (23) pour l'augmentation de pression de liquide, dans la colonne de mélange (26),
- avec une conduite de fluide caloporteur, notamment une deuxième conduite d'air de charge (43, 343) qui conduit dans la région inférieure de la colonne de mélange (26),
- avec des moyens pour l'obtention d'un produit de tête gazeux (260) dans la région supérieure de la colonne de mélange (26), et
- avec une conduite de liquide (38, 39, 40, 41) qui conduit de la partie inférieure ou centrale de la colonne de mélange dans le système à colonnes de distillation pour la séparation d'azote et d'oxygène,
**caractérisé par**
- une colonne d'enrichissement en krypton et en xénon (36) pour l'obtention d'une fraction enrichie en krypton et en xénon (51),
- une deuxième conduite d'oxygène liquide (44, 46, 47, 48) pour l'introduction d'un courant d'oxygène contenant du krypton et du xénon provenant du système à colonnes de distillation pour la séparation d'azote et d'oxygène dans la colonne d'enrichissement en krypton et en xénon (36),
- des moyens (260) pour introduire le produit de tête gazeux de la colonne de mélange (26) dans une colonne supplémentaire (27) et
- des moyens pour l'obtention d'une fraction de tête appauvrie en krypton et en xénon (28) dans la partie supérieure de la colonne d'enrichissement en krypton et en xénon (36).
